(19)

Europäisches
Patentamt
European
Patent Office
Office européen
des brevets

(11) **EP 4 224 688 A1**

(12) **EUROPEAN PATENT APPLICATION**

(43) Date of publication:
**09.08.2023 Bulletin 2023/32**

(21) Application number: **22382094.5**

(22) Date of filing: **04.02.2022**

(51) International Patent Classification (IPC):
*H02M 1/42* (2007.01)          *H02M 1/00* (2006.01)
*H02M 5/458* (2006.01)        *H02M 7/5387* (2007.01)

(52) Cooperative Patent Classification (CPC):
**H02M 1/15; H02M 1/0077; H02M 1/425;**
**H02M 5/4585; H02M 7/5387**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ikerlan, S. Coop
20500 Arrasate-Mondragon (ES)**

(72) Inventors:
• **VASIC, Miroslav
  E-28006 Madrid (ES)**

• **GARCÍA BEDIAGA, Asier
  E-20500 Arrasate-Mondragón, Guipúzcoa (ES)**
• **ALZUGUREN ALMORZA, Itziar
  E-20500 Arrasate-Mondragón, Guipúzcoa (ES)**
• **RUJAS DIEZ, Alejandro
  E-20500 Arrasate-Mondragón, Guipúzcoa (ES)**

(74) Representative: **ABG Intellectual Property Law,
S.L.
Avenida de Burgos, 16D
Edificio Euromor
28036 Madrid (ES)**

(54) **A SYSTEM FOR FILTERING FLUCTUANT POWER GENERATED IN A SINGLE-PHASE LINE FOR FEEDING AN INDUCTIVE ELEMENT**

(57)      The present invention is embodied as a system for filtering fluctuant power generated in a single-phase line operating as power factor correction when feeding an inductive element, the system comprising a first AC/AC switched converter, preferably for increasing the frequency of the input signal for feeding the inductive element. The system is characterized in that it further comprises a DC electrical energy storage element in series with the output of the first switched converter with the interposition of a second DC/AC switched converter. The second switched converter compensates the fluctuations of the power outputted in the first switched converter causing that the fluctuating power is not transferred to the load. In a preferred embodiment the inductive element is the primary in a transformer wherein the output may be rectified by a third switched AC/DC converter.

FIG. 1A

**Description**

## FIELD OF THE INVENTION

The present invention relates to a power converter for efficient energy processing, that can be used in applications such as Electric Vehicle (EV) wireless or conductive charging, induction heating and renewable energies.

The present invention is embodied as a system for filtering fluctuant power generated in a single-phase line operating as power factor correction when feeding an inductive element, the system comprising a first AC/AC switched converter, preferably for increasing the frequency of the input signal for feeding the inductive element.

The system is characterized in that it further comprises a DC electrical energy storage element in series with the output of the first switched converter with the interposition of a second DC/AC switched converter.

The second switched converter compensates the fluctuations of the power outputted in the first switched converter causing that the fluctuating power is not transferred to the load.

In a preferred embodiment the inductive element is the primary in a transformer wherein the output may be rectified by a third switched AC/DC converter.

## PRIOR ART

Medium and high-power electric conversion systems connected to the electrical distribution grid generally need to isolate or adapt input/output voltage and to control the absorbed/injected power.

Power electronics is demanding higher power density, where volume, weight and material reduction are becoming critical issues in power electronic designs. It is a well-known fact that increasing operation frequency reduces the volume of magnetic elements. That is why, high-frequency isolated systems with power electronic semiconductors are one of the technical fields with a more intensive development during the last decades.

Power electronics conversion systems generally are switched converters. Each switched converter comprises one or more semiconductors, or switches, that are operated by means of a control or gate signal that establishes the time instants at which each of these switches are in a ON or OFF state. Adapting the time instants of switches, the voltage, current and/or transferred power of the system can be controlled. The power electronics conversion systems can comprise one or several stages. Specific configurations of these stages are half-bridge and full-bridge circuits.

This area of technology is complex and modifications to any one component have a great influence on the rest of the components. In particular, a loss of synchronism in any of the switches can result in a short circuit that could destroy the entire device.

One example of high-frequency isolated converters is the dual active bridge (DAB) converter. The conversion system is composed by a first switched converter, a first bridge, located before an inductive element and, a second switched converter, a second bridge, located after the inductive element. The transferred power flow in the dual active bridge can be controlled by modulating the pulse width of each bridge voltage (PWM or pulse-width modulation), by modifying the operation frequency or by phase-shifting the pulses of one bridge with respect to the other (PSM or phase-shift modulation).

However, connecting non-resistive loads to the electrical distribution grid can produce non-desired reactive power and current harmonics. The reactive power and the harmonics are increasingly penalized by the electricity distributors, so it is necessary to find solutions that reduce or even eliminate the generation of these current distortions. In the literature, several circuits are proposed that with a particular control of switches, they achieve a correction of the power, and a minimization of the injected or absorbed current harmonics. All these circuits are also known as power factor correction (PFC) circuits.

When a PFC circuit is operating in a single-phase line, the input current follows the same shape of the grid sinusoidal voltage. As the instantaneous power is the product of voltage and current, the multiplication of these two variables produces a constant active power and a pulsating power at two times of the line frequency, specifically appears a cosine term with twice the frequency.

$$P(t) = V_{gmax} \sin(\omega_g t) * I_{gmax} \sin(\omega_g t) = \frac{V_{gmax} * I_{gmax}}{2} \left(1 - \cos(2 \omega_g t)\right)$$

wherein $V_{gmax}$ is the amplitude of the voltage of the line or grid, $I_{gmax}$ is the amplitude of the intensity of the grid and, $\omega_g$ is the pulsation in radians per seconds of the grid.

As is usually the case, a constant output power is required, so a bulky electrolytic storage capacitor placed at the output DC bus gives the remaining power. Due to that, the capacitor has a slow dynamic of double the grid frequency, leading to a voltage ripple of the same frequency.

This storage capacitor brings some drawbacks or problems. On the one hand, the storage capacitor must have a high enough capacitance value for acceptable voltage ripple and this means that it is a very bulky component. In many applications, electrolytic capacitor technology is selected by designers to achieve this high capacitive value. On the other hand, the electrolytic capacitors usually tend to have short lifetime if a good thermal management is not done, leading to reliability problems to the converter.

High-frequency active ripple energy filters are a common solution to overcome these problems. The high-frequency active filter can be a buck converter connected to a DC bus that gives or takes energy from another capacitor. In this way, the bus capacitor can be reduced by a factor 1/10.

There are also known solutions with an active filter in the low-frequency AC grid part, i.e. in series with the input AC voltage. This solution has lower requirements of power device ratings, which leads to lower cost, higher efficiency, and lower electromagnetic interference.

There are also power-electronics circuits based on electrolytic capacitor-less topologies that the fluctuating power is transferred to the load. These solutions have some drawbacks, related to transferring this fluctuation to the output or oversizing in the internal system components.

The present invention solves the identified problems by incorporating a floating DC electrical energy storage element connected by means of a second switched bridge in series with the output AC voltage of an AC/AC converter and with a specific configuration. This second switched bridge participates in the energy processing and active filtering of the PFC, reducing or even removing the pulsating power at the AC output.

## DESCRIPTION OF THE INVENTION

The present invention is *a system for filtering fluctuant power generated in a single-phase line for feeding an inductive element, the system comprising:*

- *a single-phase AC input port adapted to receive an electrical input signal at a first frequency;*
- *a single-phase AC output adapted to generate an output signal at a second frequency to feed the inductive element;*
- *a first switched converter, being an AC/AC converter adapted to provide an AC signal at the second frequency, the first switched converter being fed by the input port;*
- *a DC electrical energy storage element connected in series between the first switched converter and the output inductive element through a second switched converter, being an DC/AC converter, adapted to provide an AC signal at the second frequency to filter fluctuant power.*

The first switched converter and the second switched converter are responsive to a converter control setpoint input respectively resulting in a control strategy to define the setpoint according to the specific application objectives and to achieve the gate signals of switches.

According to an embodiment, the first switched converter is being controlled according to a converter control setpoint synchronized to the phase of the grid voltage.

According to a further embodiment, the second switched converter is being controlled according to a converter control setpoint synchronized to the phase of the grid voltage. According to another embodiment, the first switched converter is being controlled according to a converter control setpoint synchronized to the phase of the grid voltage and the second switched converter is being controlled according to a converter control setpoint phase shifted in respect to the phase of the grid voltage.

These embodiments regarding the specific manner of control of the first switched converter and the second switched converter may be combined with any of the embodiment that will be disclosed in the description of the invention and the detailed

According to the preferred embodiment, the single-phase AC input is the grid power supply. In the case of Europe, the grid operates at 50Hz and this will be the first frequency.

The system is adapted to feed an inductive element at a second frequency, preferable a higher frequency. According to the preferred embodiment, the second frequency is a high frequency. An example of the range of high frequency is from 1kHz to 1MHz. The second frequency will be interpreted as the modulation frequency applied to the *first and second switched converters,* which generally is implemented in the control board with a high frequency sawtooth or a triangle signals. The modulation frequency is defined by the converter control.

The output signal is located in the terminals of the inductive element.

The invention also comprises a DC electrical energy storage element connected in series between the first switched converter and the output inductive element through a second switched DC/AC converter adapted to provide an AC signal at the second frequency and controlled to compensate the pulsating power. This second switched converter is the interface between the DC electrical energy storage element and the high-frequency AC link. The output signal voltage operating at the second frequency is the sum of the first AC/AC switched converter output voltage and the second DC/AC converter output voltage.

This second switched converter allows the transfer of power in both directions, a first direction feeding the DC electrical energy storage element increasing its energy and, a second direction from the DC electrical energy storage element to the inductive element, for instance, when the instantaneous power level that is required in the *first switched converter* to ensure PFC is below the output constant power.

According to an embodiment, the DC electrical energy storage element is a capacitor. This capacitor only has to give or absorb the power fluctuations. The main advantage of the configuration according to this embodiment of the invention is that the capacitor is smaller (i.e. smaller capacitive value) than that needed in a filter such as those used in the prior art in the final stages after rectification to remove the low frequency ripple, since in this case, the voltage ripple is not so significant. Another important advantage of this embodiment compared to the high-frequency filters connected to dc-link is that constant and controlled dc-link voltage is not required, and therefore, passive or unfolding rectifiers can be implemented in the first switched converter.

According to another embodiment, the DC electrical energy storage element is a battery or a super-capacitor wherein the energy stored is higher than the previous embodiment.

In this embodiment the DC electrical energy storage element is not only capable of storing and returning energy according to power fluctuations but in certain periods of time it could serve as a supplementary energy source increasing the mean power that the first switched converter is capable of providing. That is, according to this embodiment, the DC electrical energy storage element has the role of compensating for power fluctuations in time and also to serve as a power supply during certain periods of time when the main power line does not have this ability or is not available.

According to an embodiment, *the first switched converter comprises:*

- *a rectifier adapted to operate at the first frequency;*
- *a first switched bridge adapted to operate at the second frequency;*

*wherein the rectifier is located between the input port and the first switched bridge.*

In this embodiment the rectifier inverts the input signal every half period, i.e. the negative half periods become positive half periods. In this embodiment, the AC/AC converter has a first switched bridge that is capable of transforming a given rectified sine wave into a square wave modulated by that rectified sine wave.

According to a further embodiment, this combination of a rectifier and a first switched bridge further comprises a capacitor located between both components, the commutated rectifier and the first switched bridge, responsible for mitigating high-frequency EMC (Electromagnetic Compatibility) harmonics, voltage ringing and/or resonance caused by the switching of the switches.

According to an embodiment, *the rectifier is a commutated rectifier and it is further adapted to commutate at the first frequency.*

A commutated rectifier uses power switches. A commutated rectifier may be used for reducing diode losses and for making the system bidirectional, so that power can flow to and from the grid.

According to an embodiment, *the first switched converter comprises a first switched bridge comprising, at least two four-quadrant switches adapted to be operated at the second frequency.*

According to an embodiment, *the second switched converter comprises a second switched bridge.*

The use of switched bridges allows the control of the power flow. The use of a high frequency allows the reduction of passive components such as inductive elements and capacitors.

According to an embodiment, *the DC electrical energy storage element comprises an extending port (EP) adapted to be connected to a further DC electrical energy source.*

According to an embodiment, *the second switched converter further comprises an intermediate converter, being a DC/DC converter, between the DC electrical energy storage element and the extending port.*

This extending port and intermediate converter allow to improve the circuit design as it increases the operational possibilities. This new port will allow an additional connection for external storage elements, energy sources or loads, providing additional functionalities to the system. For example, the DC/DC converter can be used to add galvanic isolation or to step up or down the voltage of the extending port. The extending port can also be useful to provide additional active power to the AC output during short-terms periods, to charge or discharge an additional energy storage component connected to the extending port or to provide an emergency backup operation in the events of grid power outage.

According to an embodiment,

- *the first switched bridge is a full-bridge or a half-bridge,*
- *the second switched bridge is a full-bridge or a half-bridge,*

*any combination thereof*

Either of the two configurations is usable in the invention and permits to adapt the operating conditions for example by reducing the number of components in the case of using a half-bridge. In either case the system control is carried out by acting on the switching of the switches.

According to an embodiment, *the DC electrical energy storage element and/or the DC electrical energy source if present is*

- *a floating capacitor or,*
- *a fuel cell, preferably a hydrogen cell, or,*
- *a battery or,*
- *a supercapacitor or,*
- *any combination thereof.*

The electrical energy storage element has to be floating, without any direct connection of its terminals to input port or to rectified dc-link, in order to be able to have a series connection on the AC stage without causing any short-circuit condition.

According to an embodiment, *the system further comprises the inductive element fed by the single-phase AC output.*

According to an embodiment *the inductive element comprises:*

- *a resonant tank in series or,*
- *a resonant tank in parallel or,*

*a combination thereof.*

According to an embodiment, *the system further comprises a transformer with a primary winding and at least a secondary winding, wherein the inductive element is the primary winding of the transformer and the output of the system is the secondary winding of the transformer.*

In this embodiment, the output power is not fluctuating avoiding additional power losses and the need of an additional low-frequency filter in the output. Apart from providing galvanic isolation between input and output port, the transformer can increase or reduce the output voltage.

According to an embodiment, *the primary and the secondary winding of the transformer are magnetically air coupled.*

According to an embodiment, *the inductive element is a coil or a coil heater.*

An embodiment of this example comprises an induction winding intended to be magnetically coupled with a pot or a casserole.

According to another embodiment, a transformer is interposed between the *inductive element* and the first and second switched converters in order to change the output current rate. An example of an element to be heated is the metal contained in a crucible in a foundry.

According to an embodiment, the system *further comprises a third converter, being an AC/DC converter comprising a third bridge, either switched bridge or diode bridge, adapted to operate at the second frequency, wherein the AC input of the third converter is fed by the secondary winding of the transformer and, the DC output is the output of the system.*

The third AC/DC converter provides a DC output signal, wherein the AC input signal has a constant power. According to an embodiment, the DC output feeds an output port which allows the connection and power supply of components or devices that operate with direct current.

According to a preferred embodiment, *the second frequency is higher than the first frequency* and, more preferably, the first frequency is the frequency of an electrical distribution grid and the second frequency is a high frequency, preferably in a range of from 1kHz to several MHz signal.

According to an embodiment, the third switched converter is being controlled according to a converter control setpoint synchronized to the phase of the grid voltage or to the first switched converter output or to the AC output of the second switch converter.

## DESCRIPTION OF THE DRAWINGS

These and other features and advantages of the invention will be seen more clearly from the following detailed description of a preferred embodiment provided only by way of illustrative and non-limiting example in reference to the attached drawings.

Figure 1A    This figure shows an embodiment of the invention wherein the inductive element is an inductor and the DC electrical energy storage element is a capacitor.

Figure 1B    This figure shows the embodiment of the invention of figure 1A wherein a resonant tank is in series or parallel with the inductive element.

Figure 1C    This figure shows the voltages of the circuit according to figure 1B.

Figure 1D    This figure shows the setpoints of the grid voltage, preferably obtained by a measurement, and the power signals: the power being transferred by the first switched converter, the power being transferred by the second switched converter for compensating the previous power, and the resulting power transferred to the inductive element.

Figure 2     This figure shows a specific embodiment of the example shown in figure 1A and 1B, wherein the inductive element is the primary of a transformer and it also comprises two resonant tanks.

Figure 3     This figure shows a specific embodiment of the example shown in figure 2, wherein the first switched converter is a commutated full-bridge.

Figure 4     This figure shows a specific embodiment of the first switched converter, wherein there is a first stage directly connected to an input port to rectify the input signal and a further stage comprising a full-bridge for generating a high-frequency output signal. The two stages are separated by a small capacitor acting as a low-pass filter avoiding switching noise.

Figure 5     This figure shows and specific embodiment wherein the second switched converter further comprises a DC/DC converter in order to interconnect the floating DC electrical energy storage element to an extending port, providing optionally a voltage adaptation and/or a galvanic isolation.

Figure 6     This figure shows an embodiment comprising a transformer wherein the primary of the transformer is the inductive element and the secondary is connected to an AC/DC converter for generating a DC signal allowing to feed electrical loads.

Figure 7     This figure shows the embodiment shown in figure 6 wherein a voltage source like an electrical grid is feeding the input port of the system. This figure also shows the most relevant variables of the system and the locations where such variables are measured.

Figure 8     This figure shows an equivalent circuit with three phasors representing a First Harmonic Approximation of voltages $V_1$ and $V_2$ and $V_3$.

Figure 9     This figure shows voltages $V_1, V_2, V_3$, the three phasors representing a First Hormonic Approximation of voltages $V_1, V_2, V_3$ and, the phase-shifts ($\delta_2$, $\delta_3$) of voltages $V_2$ and $V_3$ respect to the voltage $V_1$ of the first converter. Time scale is normalized to the switching period.

Figure 10    This figure shows a block diagram of the control of the system.

## DETAILED DESCRIPTION OF THE INVENTION

As will be appreciated by one skilled in the art, aspects of the present invention may be embodied as a system.

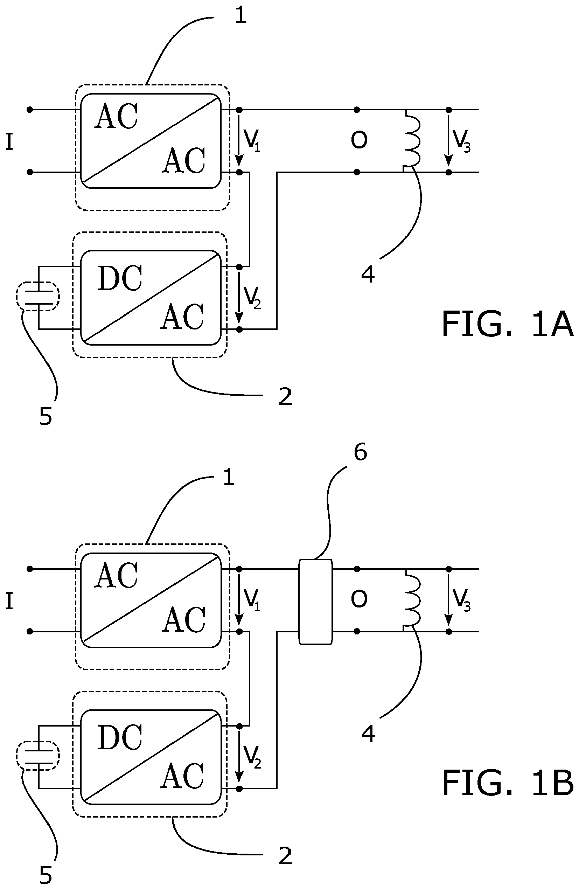

Figure 1A shows an embodiment of the invention wherein the device shows an input port (I) configured to be connected to the grid and an output port (O) at the two ends of an inductive element (4). In this embodiment the inductive element (4) is an inductor for instance a winding.

The input port (I) is the input of a first AC/AC switched converter (1). According to this embodiment the frequency of the input signal provided by the grid is 50Hz, a low frequency, and the output is a signal at a high frequency, preferably in a range of high-frequency from 1kHz to several MHz signal.

The first switched converter (1) provides a rectangular voltage wave modulated by the shape of the AC input signal. The power provided by the first switched converter (1) may be calculated as the product of the voltage and the current and therefore, the product of two sine variables of the same frequency results in a fluctuating power signal at 100 Hz.

If the grid is operating at 60Hz then the fluctuating power signal would be at 120Hz.

According to an embodiment of the invention, the system further comprises a combination of a DC electrical storage (5), in this particular case a capacitor (5), and a second switched converter, specifically a DC/AC switched converter (2).

The DC side of the second switched converter (2) is connected to the capacitor (5) and the AC side is connected in series with the first switched converter (1). As shown in Figure 1A, the capacitor (5) is floating since none of its terminals is connected to the input/output ports or to any DC-link.

Apart from the described components in Figure 1A, a correct control of the power flow of each port (by means of switches gate signals) is required to filter satisfactory the fluctuant power. For that, the system has to assure specific power flows, by means of defining power or current setpoint that can be modified depending on the application requirements and waveforms, synchronizing these setpoints to the grid voltage, and using close loop or open loop control strategies for the regulation. Furthermore, different modulation strategies are used in order to achieve the transistors switching instants and gate signal, and to reach the desired power flow between ports.

As it has already identified in the description, the instantaneous power in the grid is the product of voltage and current and the multiplication of these two variables produces a constant active power and a pulsating power at two times of the line frequency, specifically appears a cosine term with twice the frequency.

$$P(t) = V_{gmax} \sin(\omega_g t) * I_{gmax} \sin(\omega_g t) = \frac{V_{gmax} * I_{gmax}}{2}(1 - \cos(2 \omega_g t))$$

wherein $V_{gmax}$ is the amplitude of the voltage of the line or grid, $I_{gmax}$ is the amplitude of the intensity of the grid, and $\omega_g$ is the pulsation in radians per seconds of the grid.

In a preferred embodiment, a power setpoint representing the power transmitted by the first switched converter (1), $P_1$, is a cosine with double the line frequency with an offset $P_{1\,mean}$ in order to assure the power factor correction and a sinusolidal current in phase with the grid voltage.

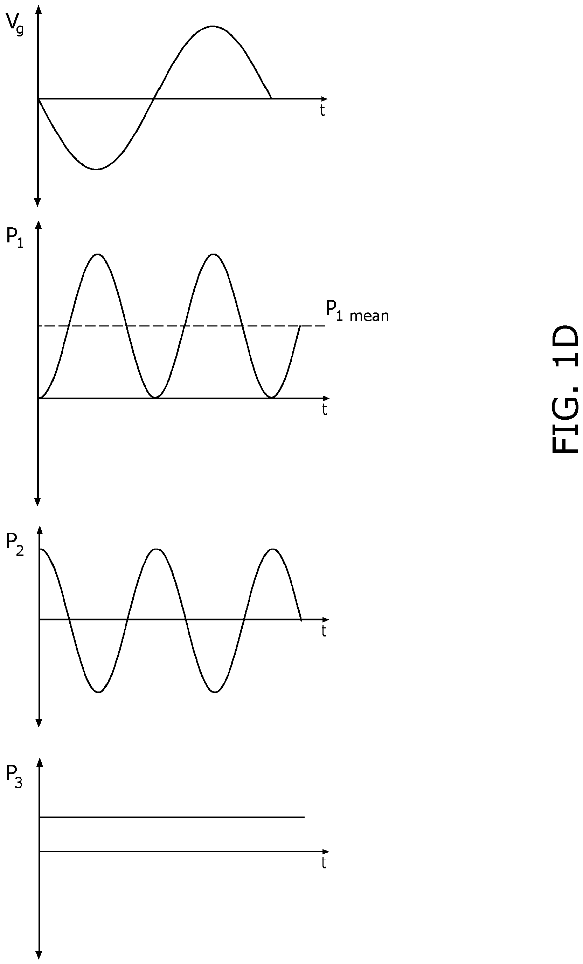

The power setpoint is illustrated in figure 1D, waveform identified as $P_1$ and, the grid voltage is shown as $V_g$. The vertical offset is equal to the amplitude of the cosine wave, and the synchonization between the grid sinus and the fluctuating power cosinus is critical to achieve a sinusolidal current in phase with the grid voltage, and thus, a PFC operation in single-phase input grid.

$$P_1(t) = P_{1\,mean}(1 - \cos(2 \omega_g t))$$

where the grid voltage is $V_g(t) = V_{gmax} \sin(\omega_g t)$ and $V_{gmax}$ is the amplitude of the voltage in the grid.

A power setpoint representing the power transmitted by the second switched converter (2) is shown as $P_2$ in Figure 1D, compensating the power fluctuation of the input port in PFC operation in the first switched converter (1), thus being constant the sum of the two powers, which is transferred to the inductive element (4). The sum of the two powers at the output is shown as $P_3$ in figure 1D. Once again, the generation of the setpoint $P_2$ is synchonized with the grid voltage. In the case of having a more energetic element than a capacitor (5), the power setpoint of the second switched converter (2) has an offset $P_{2\,mean}$, not shown in figure 1D, that means that the switched converter (2) not only provides the floating power but also provides a positive or a negative DC power. That is,

$$P_2(t) = P_{1\,mean} \cos(2 \omega_g t) + P_{2\,mean}$$

$$P_3(t) = P_1(t) + P_2(t) = P_{1\,mean} + P_{2\,mean}$$

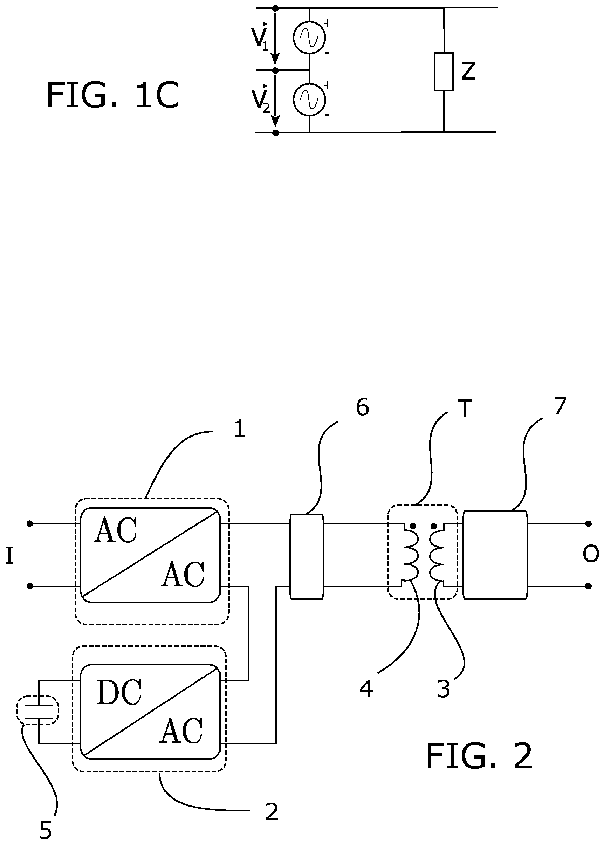

Considering system of figure 1B and voltages $V_1(t)$ and $V_2(t)$, wherein dependency with time has been omitted in figures and may be also omitted hereinafter, the equivalent circuit can be derived as shown in figure 1C wherein Z represents the impedance of the load and the resonant tank fed by the system.

There, the power transfer to the output is defined as,

$$P_3(t) = real\left(\frac{(V_1(t) + V_2(t))^2}{Z}\right)$$

In the embodiment where the energy storage element (5) is a capacitor, the fluctuating power is feeding the capacitor (5) mainly in the peaks of power and, the capacitor (5) is compensating those periods of time when the first switched converter (1) is not supplying power. The result is a constant power feeding the inductive element (4).

Therefore, the power flow control can be carried out with three different modulation strategies.

The frequency control allows changing the magnitude of the equivalent impedance Z for a specific high frequency, thus transferring more or less current to the output.

The phase-shift between $V_1(t)$ and $V_2(t)$ changes the resulting magnitude of the voltage phasor applied to the impedance Z, in the same manner that the duty cycle determines the amplitude of each voltage phasors ($V_1(t)$ and $V_2(t)$). Thus, they have a direct effect on the transferred power to the inductive element (4), in this embodiment represented in a more general manner by load Z plus the impedance of the tank in present.

In a specific example, the phase-shift is fixed; 0º when the power setpoint of second switched converter (2) is positive and 180º when the power setpoint is negative in order to achieve a negative power flow of $P_2$. In this case, the power flow is controlled modulating the amplitude of the first harmonic of $V_1(t)$ and $V_2(t)$, named $V_1'(t)$ and $V_2'(t)$, at the second frequency, using for that a PWM (Pulse width modulation) and duty-cycles. The mathematical relation of duty cycles and the first harmonic of $V_1(t)$ and $V_2(t)$ is:

$$V_1'(t) = \frac{4}{\pi} |V_g(t)| \sin\left(\frac{\pi D_1(t)}{2}\right)$$

$$V_2'(t) = \frac{4}{\pi} V_c(t) \sin\left(\frac{\pi D_2(t)}{2}\right)$$

wherein $|V_g(t)|$ is the absolute value of the voltage measured in the grid, and $V_c(t)$ is the voltage at the electrical energy storage (5). $D_1(t)$ represents the duty cycle of the *first switched bridge,* being a value between 0 to 1, being $V_1(t)$ a zero voltage when duty cycle is zero and $V_1(t)$ a square-wave voltage when the duty cycle is 1. Similarly, $D_2(t)$ is the duty cycle of the *second switched bridge.* $D_2(t)$ may be negative. When $D_2$ is negative it will be necessary to phase shift the carrier wave by 180º when determining the commutation table of the switches of the second switched converter (2).

Now, the example preferably refers to figure 1B wherein a resonant tank is included in series or parallel to the inductive element (4). Considering that a constant mean power will be applied in load Z (see equivalent circuit in figure 1C), we can assume that the current amplitude of the harmonic at the second frequency will be constant, and therefore, the duty cycle of the first switched converter (1) ($D_1(t)$) is calculated in real-time to achieve an amplitude of $V_1'(t)$ proportional to the power setpoint $P_1(t)$. The same for the duty-cycle of the second switched converter (2) ($D_2(t)$), in this case, for power setpoint $P_2(t)$ since it has the same constant amplitude current in the AC stage. In that way, the amplitude of the voltage at the second frequency applied to the impedance Z is constant and, consequently, the high-frequency AC current also. Thus, the power flow of each switched converter (1, 2) is regulated with the duty cycles, modifying the amplitude of the first harmonic of the created rectangular voltage waveform. In this specific example the AC side of the second switched converter (2) is operating at the second frequency, the high frequency; the same high frequency used by the first switched converter (1).

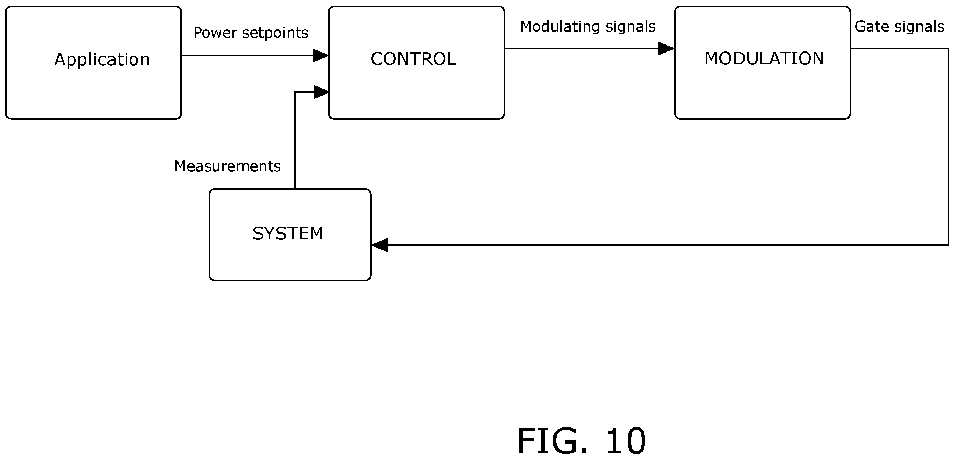

Even if the system can be controlled with a feedforward, using an inversion of the mathematical model of the circuit, and theoretically calculating the duty-cycle values necessary to obtain the power references, this circuit is preferably implemented with a close-loop control, using controllers and system measurements, as it is illustrated in Fig 10. According to a preferred embodiment, the voltage and the currents of the circuits are measured, and the controllers are implemented to cancel the voltage, current or power error respect to the defined setpoints.

From the power or current setpoints and electrical signals measurement, at least two controllers, such PI controllers, calculate the voltage setpoint of the first and second switched bridges $V_1'(t), V_2'(t)$. And duty-cycles $D_1(t)$ and $D_2(t)$ can be calculated with:

$$D_1(t) = \frac{2}{\pi} \arcsin\left(\frac{\pi V_1'(t)}{4 |V_g(t)|}\right)$$

$$D_2(t) = \frac{2}{\pi} \arcsin\left(\frac{\pi V_2'(t)}{4 V_c(t)}\right)$$

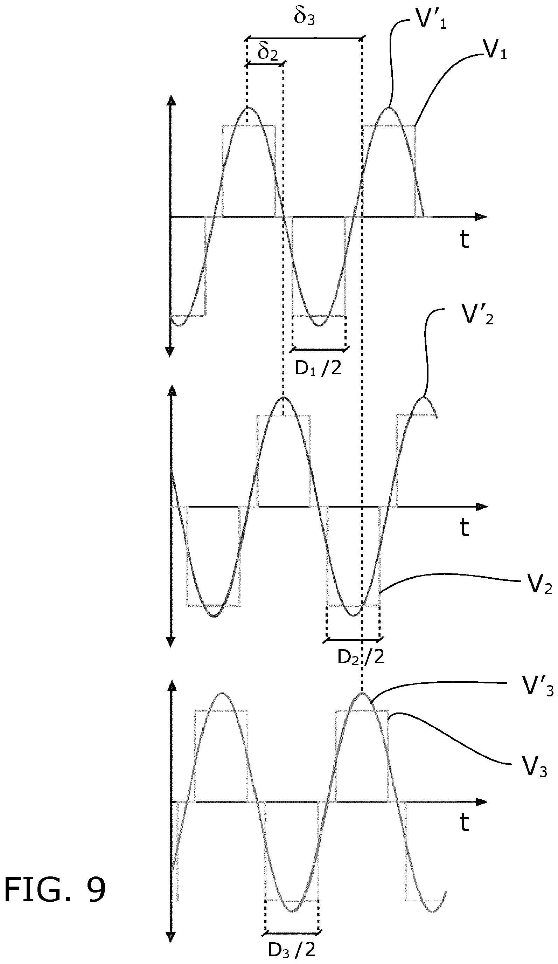

Figure 1C represents an equivalent circuit of figure 1A or 1B wherein $V_1(t)$ is the output voltage of the first switched converter (1) and $V_2(t)$ is the output voltage of the second switched converter (2). These voltages can be approximated using the First Harmonic Approximation (FHA) technique as shown in Figure 9 wherein $V_1'(t)$ and $V_2'(t)$ are the amplitude of the first harmonic approximation of $V_1(t), V_2(t)$ respectively. According to this approach, $V_1(t)$, and $V_2(t)$ are approximated with their corresponding voltage phasors, $V_1'(t)$ and $V_2'(t)$ respectively and wherein Z is the load. A frequency control of the two parameters, $V_1'(t)$ and $V_2'(t)$, allows controlling the power flow of the first switched converter (1) and the second switched converter (2). The power flow may also controlled by the phase and the amplitude of these voltages.

Figure 2 shows a further embodiment comprising the elements already disclosed in figure 1A and further comprising at least a transformer (T) wherein the inductive element (4) shown in figure 1 is the primary winding of the transformer (T) and it is magnetically coupled with a secondary winding (3). According to another embodiment, the inductive element (4) and the primary winding of the transformer (T) are two separated inductive elements connected in series with the aim of achieving a specific value of the inductance to limit or control the power conversion system.

The output (O) of the system now, according to this embodiment, is located in the secondary (3) of the transformer (T) with a high-frequency signal at an adapted voltage. The transformer (T), according to this embodiment comprises a first resonant tank (6) in parallel or in series to the primary (4) and a second resonant tank (7) in parallel or in series to the secondary (3).

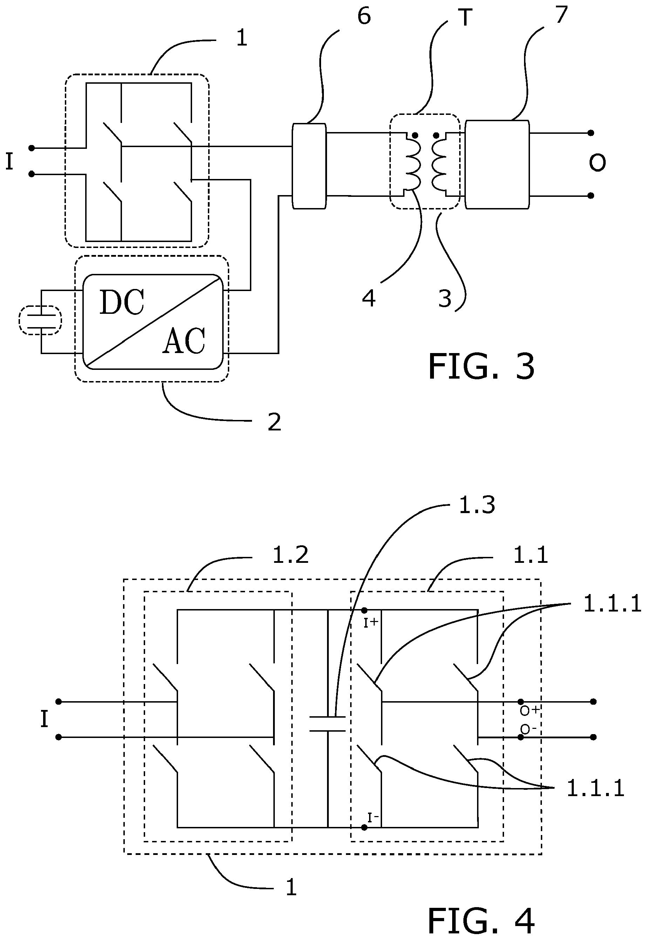

Figure 3 shows an example of the embodiment shown in figure 2 wherein the first switched converter (1) is a full-bridge comprising four switches, specifically four-quadrant switches. Four-quadrant switch is a device capable of circulating current in both directions and capable of blocking both positive and negative voltage, i.e. a bidirectional device in both voltage and current. The four switches are operated in a coordinated manner such that a control means - not shown in figure 3 - alternately opens and closes the switches a pair at a time. The switching frequency of the switches is what establishes the second frequency of the system, the high frequency.

Figure 4 shows and embodiment of the first switched converter (1). According to this embodiment, the first switched converter (1) comprises a rectifier (1.2) located between the input line (I) and a DC/AC switch bridge converter, specifically a full-bridge component identified as first switched bridge (1.1).

The rectifier (1.2) is fed by the input port (I) with a sinusoidal signal and provides at its output a rectified signal. According to this embodiment, the output signal of the rectifier (1.2) is modified by an intermediate capacitor (1.3) filtering the noise caused by the switches, and this rectified signal in turn feeds the first switched full-bridge (1.1).

The first switched full-bridge (1.1) shows the four switches (1.1.1) that switch alternately to generate the high-frequency AC signal.

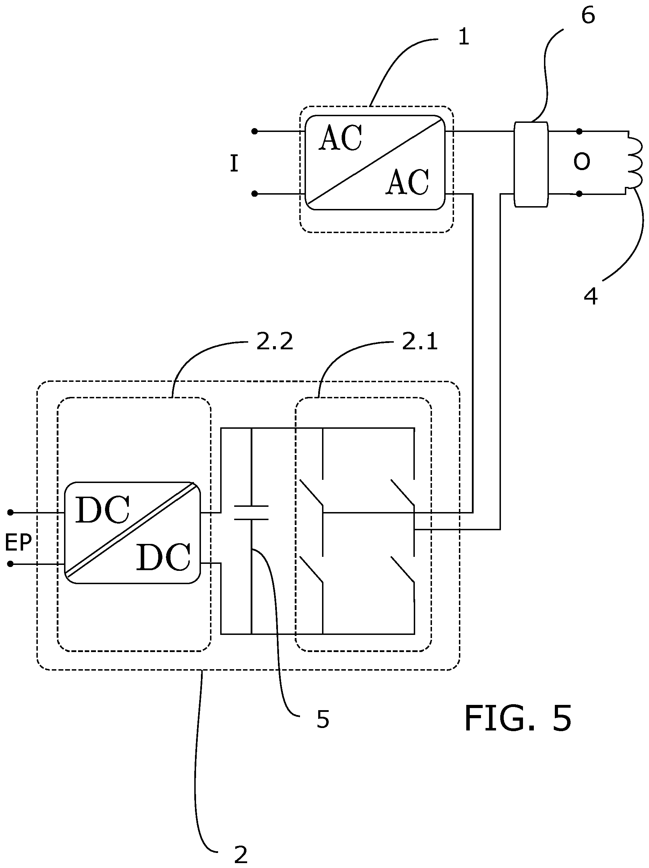

Figure 5 shows a new embodiment with respect to Figures 1A, 1B and 3 wherein the most relevant modification is in the second switched converter (2). The second switched converter (2) according to this embodiment comprises a DC/DC converter that will be identified as intermediate converter (2.2), located between the capacitor (5) - or the DC electric energy storage - and the extending port (EP). In this specific case a full-bridge converter that will be identified as second switched bridge (2.1). In this embodiment the electric energy storage element (5), for instance a capacitor, will provide the AC fluctuating power of $P_2$ and the extending port (EP) is the responsible to supply the mean power $P_{2mean}$.

The second switched bridge (2.1) is a component transferring power between the electric energy storage element (5) and the stage of the first switched converter (1) operating at the second frequency - that is, at the high-frequency - in such a manner that the energy stored in the electric energy storage element (5) is also transferred to the AC stage compensating the fluctuating power of the first switched converter (1). In this embodiment, the mean value of the transferred power is supplied from the extending port (EP) through the intermediate converter (2.2) DC/DC.

According to this embodiment, a capacitor (5) is located between the DC/DC converter (2.2) and the full-bridge converter (2.1) providing the fluctuating power.

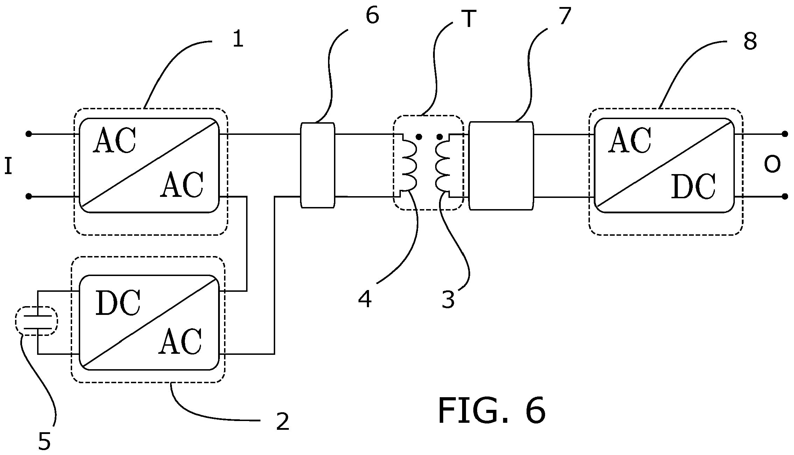

Figure 6 shows a new embodiment wherein the first switched converter (1) may be any of the specific examples such as that shown in figure 3 or 4, the second switched converter (2) may be any of the specific examples such as that shown in figure 5 and, in this specific embodiment the inductive element (4) is the primary of a transformer (T) and, wherein the secondary (3) of the transformer (T) is connected to a third switched AC/DC converter (8).

The output of this device is a DC signal wherein the power is constant since the power fluctuations has been compensated in the primary (4) by means of the second switched converter (2).

Additionally, a first resonant tank (6) is located in parallel or in series to the primary (4) of the transformer (T) allowing to operate in resonance operation and, a second resonant tank (7) is located in parallel or in series to the secondary (3) of the transformer (T) also allowing to operate in resonance.

The resulting system is a DC source where the power is very stable and free of low-frequency ripple.

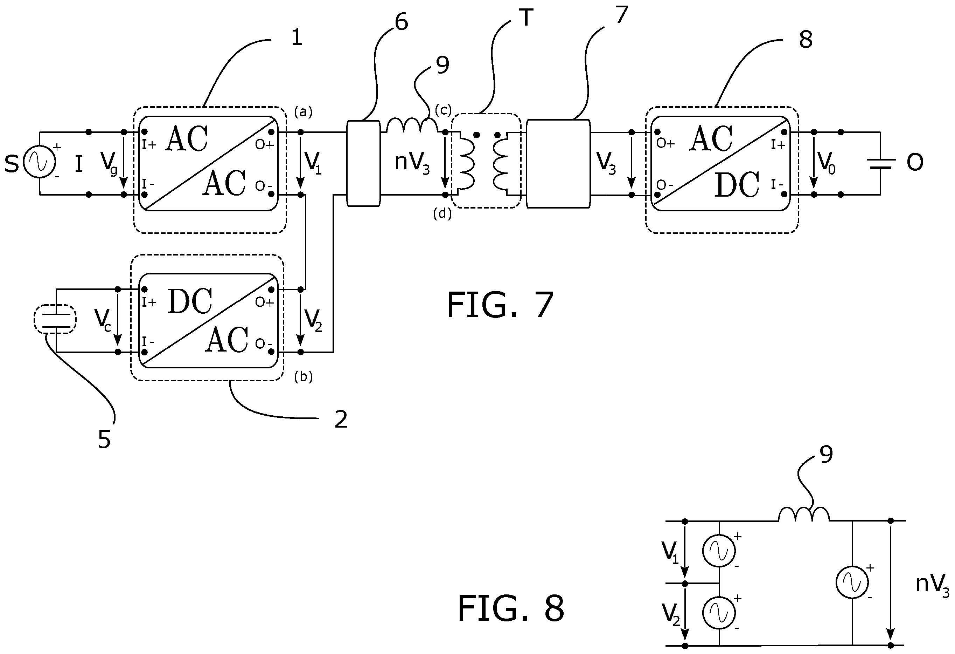

Figure 7 shows an embodiment similar to the embodiment shown in Figure 6 wherein a source (S) power is feeding the input port (I), preferably an electrical grid, and a battery is represented at the output (O) as a specific application. In this Figure 7, the inductive element (9) is now representing the equivalent inductance value seen at the primary side of the transformer (T) circuit, whereas the transformer (T) is considered ideal.

Figure 7 also shows the following variables:

$V_g$: source voltage;
$V_c$: DC electrical storage element (5) voltage;
$V_o$: output voltage of the battery;
$V_1$: voltage at the ouput of the first switched converter (1), the AC/AC converter;
$V_2$: voltage at the output of the second switched converter (2), the DC/AC converter and at the AC side;
$V_3$: voltage at the output of the third switched converter (8), the AC/DC converter and at the AC side.

The first switched converter (1), the second switched converter (2) and the third switched converter (3) now show the indications of input ports and output ports as (I+, I-, O+, O-) just to identify the orientation of the full bridge used in this embodiment, wherein the input ports and output ports references (I+, I-, O+, O-) are also shown in figure 4 even if such switched converters (1, 2, 3) admit the transfer of energy in both directions.

According to these new references, the first switched converter (1), the second switched converter (2) and the third switched converter (3) have input terminals I+ and I- and output terminals O+ and O- as shown in figure 7.

The first, second and third switch converters (1, 2, 3) generate AC voltage waveforms $V_1(t)$, $V_2(t)$ and $V_3(t)$ at their output terminals wherein explicit time dependency in notation will be avoided hereinafter if not necessary.

$V_1$ is the voltage between output ports O+ and O- of the first switched converter (1), $V_2$ is the voltage between output ports O+ and O- of the second switched converter (2) and, $V_3$ is the voltage between output ports O+ and O- of the third switched converter (3). These voltages can be approximated using the First Harmonic Approximation (FHA) technique as shown in Figure 9 wherein $V_1'$, $V_2'$, $V_3'$ are the amplitude of the first harmonic approximation of $V_1$, $V_2$, $V_3$ respectively.

Figure 8 represents this approach, where $V_1$, $V_2$ and $V_3$ are approximated with their corresponding voltage phasors, $V_1'$, $V_2'$ and $V_3'$ respectively, the three parameters determining the power transferred to the output (O).

The amplitude and the phase of each phasor are the amplitude and the phase of the first harmonic of the corresponding output voltage waveform.

As in the case of the control of figure 1A and 1B, a frequency control of $V_1$, $V_2$ and $V_3$ can be used to regulate the power flow of each switched converter, as well as the phase and the amplitude of these voltages.

The phasor amplitudes and phases can be adjusted using five control parameters of the circuit, which are the effective duty cycle of each bridge ($D_1$, $D_2$ and $D_3$) and the phase-shifts respect to the *first switched converter* (1) ($\delta_2$, $\delta_3$), that are illustrated in detail in Figure 9.

The effective duty cycle $D_i$ of each waveform can be determined as $D = PW/T$ wherein $PW$ is the pulse width (pulse active time), ant $T$ is the switching period at the second frequency.

With these control parameters, switches of the three converters (1, 2, 8) can be controlled in order to transfer the desired power to the output and ensure a unity Power Factor (PF) in the case that the converter is connected to the main grid.

The amplitudes of the first harmonics can be controlled according to the following equations.

$$V_1' = \frac{4}{\pi} |V_g| \sin\left(\frac{\pi D_1}{2}\right)$$

$$V_2' = \frac{4}{\pi} V_c \sin\left(\frac{\pi D_2}{2}\right)$$

$$V_3' = \frac{4}{\pi} V_o \sin\left(\frac{\pi D_3}{2}\right)$$

wherein $V_g$ is the voltage measured in the grid voltage, $V_c$ is the voltage measured at the electrical energy storage (5)and, $V_o$ is the voltage measured at the output port (O).

Figure 7 now shows an inductor identified as inductor (9) wherein in this case the such inductor is the equivalent inductance value seen at the side of the primary winding of the transformer (T). This inductance is the leakage inductance of the transformer or it is an additional inductor connected in series with the primary winding of the transformer (T).

The voltage applied on the left side of the inductor (9), between points (a) and (b), is the sum of the $V_1'$ and

$V_2'$ phasors, while the voltage applied in the right side of the inductor (9), between points (c) and (d), is the phasor $V_3'$ multiplied by the ratio of the number of turns n between the primary and the secondary windings of the transformer.

As seen in figure 10, depending on the specific application, the required power ($P_1$,$P_2$,$P_3$), voltage ($V_o$,$V_c$) and/or current ($I_I$,$I_c$,$I_O$) setpoints of the system are defined. These setpoints will be compared with some electrical measurements, for example input port (I), extending port (EP), floating capacitor (2) and/or output port (O) voltages and currents. Some controllers will regulate or determine the amplitude and/or the phase of the three phasors $V_1'$,$V_2'$,$V_3'$ to achieve the setpoint defined by the application, i.e. to cancel the error between the power setpoints and measurements. Depending on the modulation strategy and which control parameters are selected (i.e. duty-cycle or phase-shift), the controller will provide the amplitude and/or the phase of the three phasors $V_1'$,$V_2'$,$V_3'$, controlling the voltage applied to the inductor and, consequently, the current that is flowing through the three ports.

Considering the control without phase-shift among the three phasors $V_1$,$V_2$,$V_3$ and the control is only able to change the amplitude $V_1'$,$V_2'$,$V_3'$, the duty-cycle values are determined using the next formulas:

$$D_1 = \frac{2}{\pi}\arcsin\left(\frac{\pi V_1'}{4\,|V_g|}\right)$$

$$D_2 = \frac{2}{\pi}\arcsin\left(\frac{\pi V_2'}{4\,V_c}\right)$$

$$D_3 = \frac{2}{\pi}\arcsin\left(\frac{\pi V_3'}{4\,V_o}\right)$$

where $V_g$,$V_o$ and $V_c$ are input data received as measurement signals and $V_1'$,$V_2'$ and $V_3'$ are provided by the controllers.

From the duty-cycles, a regular PWM modulation is implemented to achieve the gate signals of all switches. This PWM modulation is based on a sawtooth or triangular signal at the second frequency (usually known as carrier) and the duty-cycles (or modulators). Comparing both signals, the gate signals of switches are achieved.

The measurement of the grid voltage is also required in the control, in order to synchronize the setpoint signals to the grid waveform.

Some of the most relevant applications of the invention are Electric Vehicles (EV) On-Board Charging (OBC), Inductive Power Transfer (IPT) and induction heating.

In an OBC application, for instance embodiment shown in figure 7, the use of a DC electrical energy storage element (5) connected in series between the first switched converter (1) and the output port (O) through a second switched converter (2) and, the DC electrical energy storage element (5) being in floating conditions, acts as an active filter. The use of this filter allows transferring constant power to the secondary side of the transformer, thus reducing considerably the size of the output capacitor or avoiding to transfer the fluctuant power to the output port. The floating capacitor has not to be extremely big, since the voltage ripple in the electrical energy storage element (5) is not critical. As it is a single-stage converter without an intermediate DC bus, the electrolytic capacitor can be avoided, improving the system lifetime and the power density. Finally, an OBC with an active secondary gives more degrees of freedom in the modulation strategy and these degrees of freedom can be used in order to optimize the performance of the converter, such as the reduction of the power losses.

The connection of an extending port (EP) to the DC voltage energy storage (5) element through an intermediate converter (2.2) can also bring other advantages in Inductive Power Transfer (IPT) systems. In this application, for instance embodiment shown in figure 6, the amplitude of the resonant current flowing through the resonant tank (6, 7) is reduced with this filter, therefore, the maximum rating of the switched and passive components can be decreased, reducing the size, the prize and or the requirements of these components.

This circuit configuration can also help reducing the problems related to bifurcation phenomena. This bifurcation phenomena appears due the interacting between the self-inductance of coils and the resonant capacitors, creating extra resonant points. These new resonant points cause that several zero crossing of the impedance phase, and therefore, difficulties to control the inductive or capacitive behavior of the equivalent load.

In induction heating systems, electrolytic capacitor-less topologies are common, where instead of filtering the fluctuating power, it is directly transferred to the output coil. However, with a filter according to any of the embodiments, for instance the example shown in figure 1B comprising a resonant tank before the inductance (4), the same advantages as in the IPT application are available.

In the case of having a more energetic element than a capacitor as electrical storage element (5) such as a battery or an ultra-capacitor, the power setpoint $P_2$ can have an offset. Therefore, the extending port (EP) will give an additional DC power to the output, apart from the DC power tranferred from the input port. This can be interesting for smoothing peak power requirements, that is to say, to be able to give more power to the output than the one contracted, resulting in money savings, or provide a transient peak power to the inductive element (4). This energy storage element (5) can be charged during low output power requirement moments, for example, in the IPT application, when the Electric Vehicle (EV) is not charging. Then, when the EV charging is required, the energy storage element (5) can support the charging process, not only filtering the low frequency power ripple, but also giving a power offset.

Furthermore, apart from PFC operation and compensating the low-frequency power fluctuations, if requested by the application, according to another embodiment the system works absorving or injecting specific harmonics of different frequencies or reactive power, as an active filter to compensate non-linear load in a grid. In this particular case, the power or current setpoint will be determined from the current measurements at the grid in order to compensate in real time the harmonics of the non-linear load connected in the grid. The non-linear load is not part of the the patented system, but the current measurements are required to determine the power or current setpoints.

The commented variations can be carried out by simply changing the power references. Specifically, according to a preferred embodiment an external component determines the harmonic components to be compensated, for instance harmonic components generated by other electrical system, defining the second converter setpoint. If two or more harmonic waveforms are identified, the second converter setpoint comprises a combination of such harmonic waveforms to be compensated.

In any case, the main advantage of the system is that all the power fluctuation is removed in the primary side of the isolation component, for instance the transformer, thus, only the mean power is transferred to the secondary. This, on the one hand, reduces the conduction losses of the magnetic component, as the $I_{rms}$ is reduced. On the other hand, as, in this case, the electrical storage element (5) is not connected to the output terminals of the converter, the magnitude of the voltage ripple is not important. Thus, the capacity and the consequent size of, for example, the storage capacitor is reduced considerably.

Moreover, the floating DC voltage energy storage (5) element connected in series between the first switched converter (1) and the output inductive element (4) through a second switched converter (2) has a double role. It participates in energy processing and provides energy storage.

## Claims

1. A system for filtering fluctuant power generated in a single-phase line for feeding an inductive element (4), the system comprising:

   - a single-phase AC input port (I) adapted to receive an electrical input signal at a first frequency;
   - a single-phase AC output adapted to generate an output signal at a second frequency to feed the inductive element (4);
   - a first switched converter (1), being an AC/AC converter, adapted to provide an AC signal at the second frequency, the first switched converter (1) being fed by the input port (I);
   - a DC electrical energy storage element (5) connected in series between the first switched converter (1) and the output inductive element (4) through a second switched converter (2), being an DC/AC converter, adapted to provide an AC signal at the second frequency to filter fluctuant power.

2. A system according to claim 1, wherein the first switched converter (1) comprises:

   - a rectifier (1.2) adapted to operate at the first frequency;
   - a first inverter (1.1), being a DC/AC inverter, adapted to operate at the second frequency;

   wherein the rectifier (1.2) is located between the input port (I) and the first inverter (1.1).

3. A system according to claim 2, wherein the rectifier (1.2) is a commutated rectifier (1.2) and it is further adapted to commutate at the first frequency.

4. A system according to claim 1, wherein the first switched converter (1) comprises at least two four-quadrant switches adapted to be operated at the second frequency.

5.  A system according to any of claims 1 to 4, wherein the second switched converter (2) comprises a second switched bridge (2.1).

6.  A system according to any of claims 1 to 5, wherein the DC electrical energy storage element (5) comprises an extending port (EP) adapted to be connected to a further DC electrical energy source.

7.  A system according to claim 6, wherein the second switched converter (2) further comprises an intermediate converter (2.2), being a DC/DC converter, between the DC electrical energy storage element (5) and the extending port (EP).

8.  A system according to any of previous claims, wherein

    - the first inverter (1.1) is a full-bridge or a half-bridge,
    - the second switched bridge (2.1) is a full-bridge or a half-bridge,

    any combination thereof.

9.  A system according to any of previous claims, wherein the DC electrical energy storage element (5) and/or the DC electrical energy source if present is

    - a floating capacitor or,
    - a fuel cell, preferably a hydrogen cell, or,
    - a battery or,
    - a supercapacitor or,
    - any combination thereof.

10. A system according to any of previous claims, wherein the system further comprises an inductive element (4) fed by the single-phase AC output.

11. A system according to any of previous claims, wherein the single-phase AC output comprises:

    - a resonant tank (6) in series or,
    - a resonant tank (6) in parallel or,

    a combination thereof.

12. A system according to claim 10 or 11, wherein it further comprises a transformer (T) with a primary winding and at least a secondary winding, wherein the inductive element (4) is the primary winding of the transformer (T) and the output(s) of the system is at the secondary (3) winding(s) of the transformer (T).

13. A system according to the previous claim, wherein the primary (4) and the secondary (3) winding of the transformer (5) are magnetically air coupled.

14. A system according to any of claims 10 to 11, wherein the inductive element (4) is a coil or a coil heater.

15. A system according to any of claims 12 to 13, wherein the system comprises a coil or a coil heater fed by the secondary (3) winding of the transformer (T).

16. A system according to any of claims 12 to 13, wherein it further comprises a third converter (8), being an AC/DC converter comprising a third bridge, either switched bridge or diode bridge, adapted to operate at the second frequency, wherein the AC input of the third converter (8) is fed by the secondary (3) winding of the transformer (T) and, the DC output is the output of the system.

17. A system according to any of previous claim, wherein the second frequency is higher than the first frequency.

FIG. 1A

FIG. 1B

FIG. 1C

FIG. 2

FIG. 1D

FIG. 3

FIG. 4

FIG. 5

FIG. 6

FIG. 7

FIG. 8

EP 4 224 688 A1

FIG. 9

Application → **Power setpoints** → CONTROL → **Modulating signals** → MODULATION → Gate signals

**Measurements** → SYSTEM

EP 4 224 688 A1

FIG. 10

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/075338 A1 (TANAKA KAZUFUMI [JP] ET AL) 11 March 2021 (2021-03-11) * paragraphs [0027], [0028], [0047], [0071]; figures 1, 2 * ----- | 1-17 | INV. H02M1/42 H02M1/00 H02M5/458 H02M7/5387 |

TECHNICAL FIELDS
SEARCHED       (IPC)

H02J
H02M

The present search report has been drawn up for all claims

| Place of search | Date of completion of the search | Examiner |
|---|---|---|
| Munich | 12 July 2022 | Sulic, Tomislav |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

  .........................................................................

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 22 38 2094

This annex lists the patent family members relating to the patent documents cited in  the above-mentioned European search report.
The members are as contained in the European Patent Office EDP file on
The European Patent Office is in no way liable for these particulars which are merely given for the purpose of information.

12-07-2022

| Patent document cited in search report | Publication date | Patent family member(s) | Publication date |
|---|---|---|---|
| US 2021075338 A1 | 11-03-2021 | DE 112018006973 T5 | 08-10-2020 |
| | | JP      6370522 B1 | 08-08-2018 |
| | | JP WO2019150443 A1 | 06-02-2020 |
| | | US    2021075338 A1 | 11-03-2021 |
| | | WO    2019150443 A1 | 08-08-2019 |

EPO FORM P0459

For more details about this annex : see Official Journal of the European Patent Office, No. 12/82